# EUROPEAN PATENT APPLICATION

(11) **EP 1 548 720 A2**
(43) Date of publication of application: **29.06.2005**
(21) Application number: 04255241.4
(22) Date of filing: 31.08.2004
(51) Int. Cl.: G11B 7/09

(54) **Objective lens driving device enabling speed-up of optical disk drive**

(30) Priority: 26.11.2003 JP 2003396190
(71) Applicant: Mitsumi Electric Co., Ltd., Tama-Shi, Tokyo (JP)
(72) Inventor: Yamada, Tsukasa, Tama-shi, Tokyo (JP)
(74) Representative: Haley, Stephen

(57) **Abstract**

In an objective lens driving device (100) having a lens holder (20) which is movable and holds an objective lens (30), coil devices (4,16) are disposed around the objective lens and held by the lens holder. Around the objective lens, main magnets (1) are disposed for applying driving forces to the coil devices according to energization to the coil devices. Furthermore, each of auxiliary magnets (2) are disposed between adjacent ones of the coil devices. The auxiliary magnets apply forces to the coil devices according to the energization to the coil devices for supplementing the driving forces.

## Description

This application claims priority to prior Japanese patent application JP 2003-396190, the disclosure of which is incorporated herein by reference.

This invention relates to an objective lens driving device suitable for use in an optical pickup of an optical disk drive or the like, and further relates to an optical pickup using it.

An optical disk drive is a device for reading or writing information from or into an optical disk (CD, CD-ROM, CD-R, CD-RW, DVD-ROM, DVD+R, DVD-R, DVD-RAM, DVD+RW, DVD-RW, Blu-ray, AOD, or the like). In order to achieve reading or writing the information from or into the optical disk, the optical disk drive of this type comprises an optical pickup for irradiating a laser beam onto the optical disk and detecting its reflected light.

In general, an optical pickup comprises a laser beam source for emitting a laser beam and an optical system for guiding the emitted laser beam to an optical disk and further guiding its reflected light to a photodetector. This optical system includes an objective lens disposed so as to confront the optical disk.

It is necessary that the objective lens used in the optical pickup be accurately controlled in position with respect to a focus direction along an optical axis and a track direction along a radial direction of the optical disk to thereby accurately focus a laser beam on a track of a recording surface of the rotating optical disk. These controls are called a focusing control and a tracking control, respectively. Further, following improvement in recording density, there have recently been increasing demands for removing or suppressing the influence caused by warping of the optical disk. In view of this, it is also necessary that the objective lens be subjected to a so-called tilting control.

In an objective lens driving device of this type, a lens holder holding the objective lens is elastically supported by a plurality of suspension wires for enabling the focusing control, the tracking control, and the tilting control. Further, focusing coils, tracking coils, and tilting coils are attached to the lens holder. These coils are partly located in gaps of a magnetic circuit. With this structure, the conventional objective lens driving device is capable of finely controlling a position and an inclination of the objective lens by controlling currents flowing through the respective coils.

Recently, there has been available a super thin type optical disk drive called an ultra slim drive. In the super thin type optical disk drive of this type, an objective lens driving device is normally configured as a so-called asymmetry type. With this asymmetry type objective lens driving device, acceleration sensitivity can be enhanced, but it is quite difficult to prevent occurrence of undesired resonance such as rolling, pitching, or yawing of an objective lens.

On the other hand, it has also been proposed to configure an objective lens driving device as a so-called symmetry type (e.g. see JP-A-2001-93177). With this symmetry type objective lens driving device, it is easy to prevent occurrence of undesired resonance of an objective lens, but acceleration sensitivity is lowered not only in the foregoing focus direction but in a so-called tilt direction. Therefore, it is difficult to achieve the speed-up of the optical disk drive.

It is therefore an object of this invention to provide an objective lens driving device that can prevent occurrence of undesired resonance and increase acceleration sensitivity in focus and tilt directions, thereby enabling the speed-up of an optical disk drive.

It is another object of this invention to provide an optical pickup comprising the foregoing objective lens driving device.

Other objects of this invention will become clear as the description proceeds.

According to an aspect of this invention, there is provided an objective lens driving device comprising a lens holder being movable and holding an objective lens, coil devices disposed around said objective lens and held by said lens holder, main magnets disposed around said objective lens and applying driving forces to said coil devices according to energization to said coil devices, and auxiliary magnets each disposed between adjacent ones of said coil devices and applying forces to said coil devices according to the energization to said coil devices for supplementing said driving forces.

According to another aspect of this invention, there is provided an optical pickup for irradiating a beam onto an optical medium and detecting a reflected beam reflected from the optical medium, the optical pickup including an objective lens driving device which comprises a damper base, a suspension member elastically supporting the lens holder with respect to the damper base, and a damper member interposed between the damper base and the lens holder for separating, in terms of vibration, the lens holder from the damper base, the damper base being movably supported.

### In the Drawings;

Fig. 1 is a perspective view of an objective lens driving device according to a preferred embodiment of this invention;
Fig. 2 is an exploded perspective view, as seen obliquely from above, of the objective lens driving device shown in Fig. 1;
Fig. 3 is an exploded perspective view, as seen obliquely from below, of the objective lens driving device shown in Fig. 1; and
Fig. 4 is an exemplary diagram for describing the main part of the objective lens driving device shown in Fig. 1.

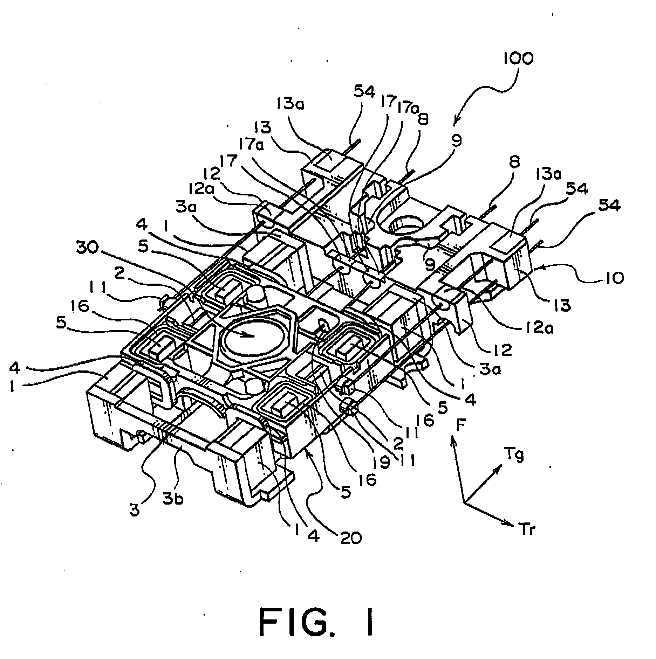

Referring to Fig. 1, description will be made about the overall structure of an objective lens driving device according to a preferred embodiment of this invention.

The illustrated objective lens driving device 100 comprises a damper base 10, a lens holder 20, an objective lens 30 retained by the lens holder 20, four first suspension wires 54 and two second suspension wires 8 swingably supporting the lens holder 20 relative to the damper base 10, a yoke base 3 fixed to the damper base 10, and four main or first permanent magnets 1 and two auxiliary or second permanent magnets 2 fixed to the yoke base 3.

The objective lens driving device 100 is mounted on an optical base (not illustrated) of an optical disk drive and forms part of an optical pickup. The optical base is attached to guide bars (not illustrated) so as to be movable in a radial direction of an optical disk (i.e. a tracking direction Tr) loaded into the optical disk drive. The objective lens 30 has an optical axis extending in a focusing direction F perpendicular to the optical disk loaded in the optical disk drive.

The optical base is further mounted with a laser diode, a photodetector, and a predetermined optical system. A laser beam from the laser diode is irradiated onto the optical disk via the optical system, and its reflected light is guided to the photodetector via the optical system. In this case, the objective lens 30 is included in the optical system.

On both lateral sides, with respect to a tangential direction Tg, of the damper base 10, fixing portions 12 and 13 are respectively formed for fixing the first suspension wires 54 thereto. Specifically, the fixing portions 12 and 13 elastically support two spaced-apart portions of each first suspension wire 54 via damper members 12a and 13a made of rubber or the like, respectively.

Further, at a center portion, in the tracking direction Tr, of the damper base 10, fixing portions 17 are formed at a front end thereof on both sides with respect to the center of the front end of the center portion. In addition, fixing grooves 9 are formed in one-to-one correspondence with the fixing portions 17. The fixing grooves 9 are each formed into an S-shape so as to be more spaced apart from each other as approaching a rear end, in the tangential direction Tg, of the damper base 10. Each fixing groove 9 extends in the tangential direction Tg to open to the outside at the rear end of the damper base 10. The second suspension wires 8 are elastically supported by the fixing portions 17 via damper members 17a made of rubber or the like, respectively.

With the structure as described above, the lens holder 20 is elastically supported by the first suspension wires 54 and the second suspension wires 8 so as to be freely movable within a small range in various directions above the yoke base 3. That is, the lens holder 20 is substantially separated, in terms of vibration, from the damper base 10 and the yoke base 3.

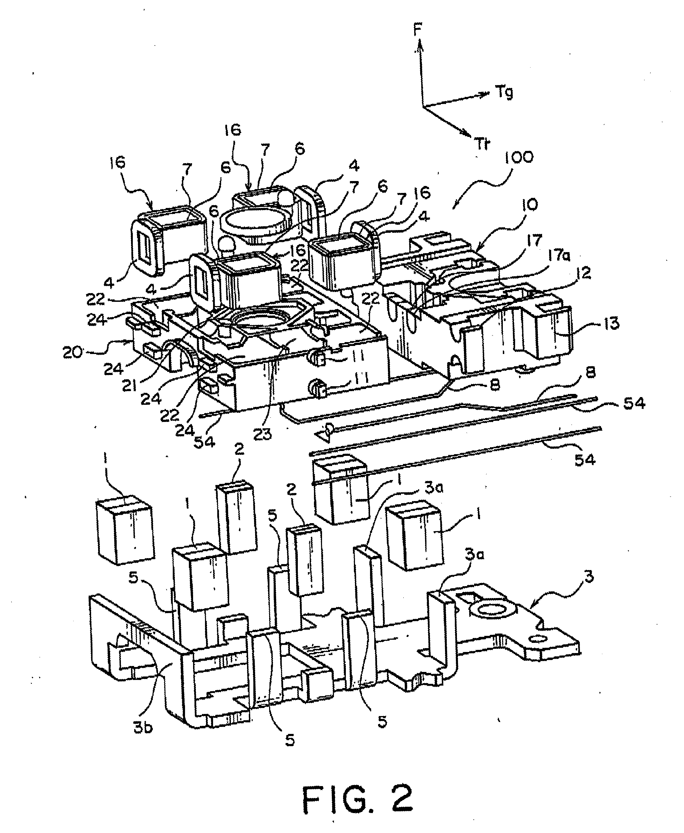

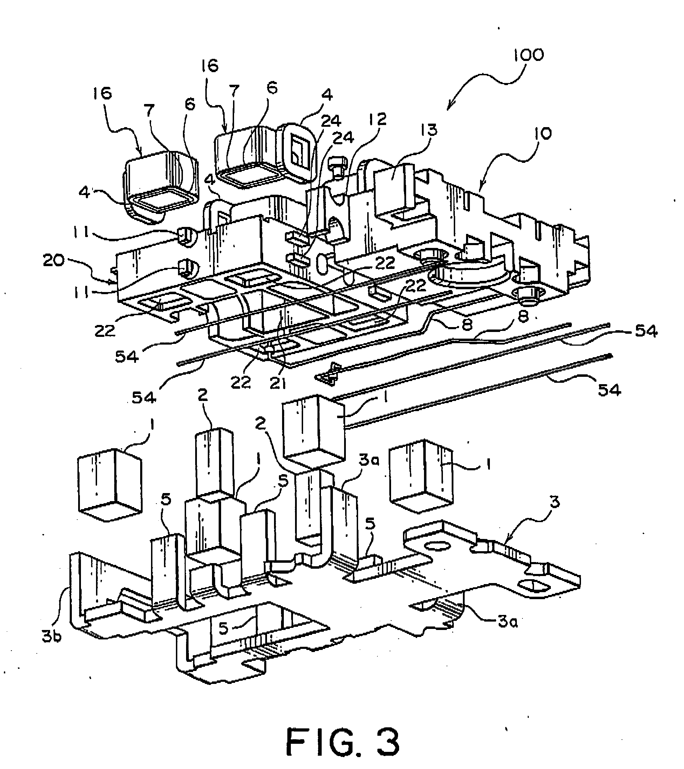

Referring to Figs. 2 and 3 along with Fig. 1, description will be made about a detailed structure of the objective lens driving device 100.

The lens holder 20 is in the shape of a rectangular thick plate and has a mounting hole 21 formed at its center for mounting the objective lens 30 therein, coil mounting holes 22 formed symmetrically at its four corners for mounting coil members 16 therein, respectively, and holes 23 formed for the second permanent magnets 2 to extend therethrough, respectively. The lens holder 20 further has fixing portions 11 for fixing the suspension wires 54 thereto, respectively. The fixing portions 11 are formed at both ends, in the tracking direction Tr, of the lens holder 20 with the two of them arranged vertically at each end. Moreover, the lens holder 20 has four pairs of bobbins (hook portions) 24 at both ends thereof in the tangential direction Tg, with the two pairs thereof projecting in the tangential direction Tg at each end. Each pair of bobbins are arranged vertically for a corresponding tracking coil 4 to be wound therearound.

The yoke base 3 comprises four plate-shaped yokes 5 with the two of them provided at two portions on each of both sides of a center portion, in the tangential direction Tg, of the yoke base 3, two plate-shaped yokes 3a provided at portions near one end, in the tangential direction Tg, of the yoke base 3, and a bridge-shaped yoke 3b provided at the other end thereof in the tangential direction Tg. The plate-shaped yokes 5 are received in and extend through the corresponding coil members 16, respectively.

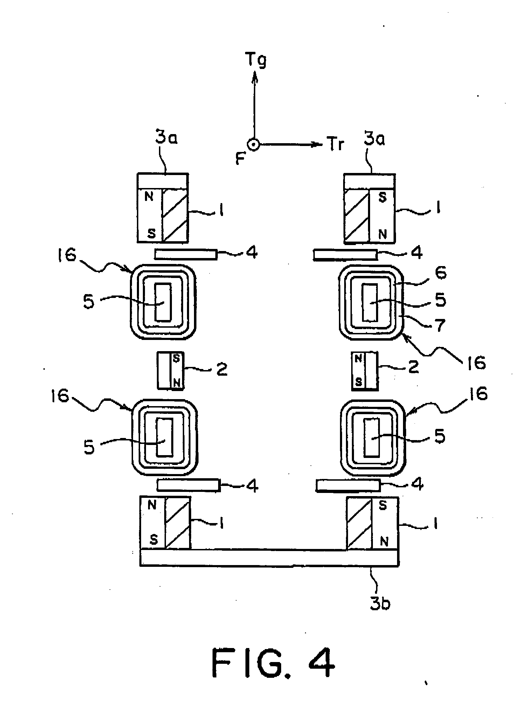

Referring further to Fig. 4, description will be made about arrangement and polarity of the first permanent magnets 1 and the second permanent magnets 2.

The first permanent magnets 1 are disposed in contact with the plate-shaped yokes 3a and 3b, respectively, and have polarities in the tangential direction Tg, respectively. Of the first permanent magnets 1, each pair of the two arranged in the tangential direction Tg are set to have the same polarities while each pair of the two arranged in the tracking direction Tr are set to have the opposite polarities. Each of the second permanent magnets 2 is disposed in the middle between the two first permanent magnets 1 arranged in the tangential direction Tg and has a polarity in the tangential direction Tg which, however, is set opposite to the polarities of those first permanent magnets 1. Therefore, the polarities of the second permanent magnets 2 are set opposite to each other.

Referring back to Figs. 1 to 3, each of the coil members 16 comprises a tilting coil 6 and a focusing coil 7 wound therearound. Four coil devices each formed by a combination of the coil member 16 and the tracking coil 4 are disposed symmetrically with respect to the lens holder 20. The tilting coil 6 and the focusing coil 7 may be wound around a non-illustrated bobbin or formed as air-core coils. As described above, the tracking coils 4 are wound around the bobbins 24 of the lens holder 20. In this manner, the three kinds of the coils are provided on the lens holder 20. Thereafter, the objective lens 30 is attached to the lens holder 20.

The focusing coils 7 and the tracking coils 4 have end portions respectively connected to the fixing portions 11, serving as connection terminals, of the lens holder 20. As described above, the first suspension wires 54 are also connected at their ends to the fixing portions 11, respectively.

On the other hand, each tilting coil 6 has one end connected to one end of the second suspension wire 8 extending with a stepped portion formed on the way to its other end. Specifically, such one end of the tilting coil 6 is drawn out into a space of the lens holder 20 and fixed by soldering to an L-shaped bent end portion formed at the one end of the second suspension wire 8. In the state where the second suspension wire 8 passes through the fixing portion 17 and the S-shaped bent fixing groove 9 of the damper base 10 so as to be fixed, the other end of the second suspension wire 8 projects reward of the damper base 10.

A positional relationship among the tilting coils 6, the focusing coils 7, the tracking coils 4, the main magnets 1, the auxiliary magnets 2, and the yokes 3a, 3b, and 5 can be readily understood from Fig. 4. Specifically, the coil devices are disposed symmetrically at both sides of a plane which includes the optical axis and extends in the tangential direction Tg. The main magnets 1 are also disposed symmetrically at both sides of the plane. Simultaneously, the auxiliary magnets 2 are disposed symmetrically at both sides of the plane. In addition, the tilting coils 6, the focusing coils 7, and the tracking coils 4 are partly disposed in magnetic gaps of a magnetic circuit formed by a combination of the yokes 3a, 3b, and 5, the main magnets 1, and the auxiliary magnets 2.

By properly controlling currents that flow through the coils 6, 7, and 4, the lens holder 20 makes one or more of a tilting motion in the tracking direction Tr (i.e. a turning motion with respect to an axis extending in the tangential direction Tg), a movement in the tracking direction Tr, and a movement in the focusing direction F on the basis of a relationship among magnetic fields produced by the main magnets 1, the auxiliary magnets 2, and the yokes 3a, 3b, and 5. In this event, the main magnets 1 serve to apply driving forces to the focusing coils 7 and the tracking coils 4. The auxiliary magnets 2 serve to supplement driving forces to the focusing coils 7 and the tilting coils 6. Note that the focusing direction F, the tangential direction Tg, and the tracking direction Tr may also be called a first direction, a second direction, and a third direction, respectively.

When the coils 6, 7, and 4 are energized, the focusing coils 7 on both lateral, i.e. right and left, sides with respect to the tangential direction Tg receive driving forces in the same direction with respect to the focusing direction F. Likewise, the tracking coils 4 on both right and left sides with respect to the tangential direction Tg receive driving forces in the same direction with respect to the tracking direction Tr.

On the other hand, the tilting coils 6 on the right and left sides with respect to the tangential direction Tg receive driving forces in mutually opposite directions. In this event, since the magnetic force lines are bent by the auxiliary magnets 2 so as to be directed toward the outside and the inside of the yokes in the tracking direction Tr, driving forces in the same direction are applied to the coils on the outside and the inside in the tracking direction Tr to thereby increase electromagnetic forces.

Further, since the second suspension wires 8 are supported on the inside in the tracking direction Tr, the acceleration sensitivity in the tilt direction can be increased and the undesired resonance caused by the tilting coils 6 can be prevented. Likewise, the acceleration sensitivity can also be increased with respect to the focusing coils 7 by the arrangement of the auxiliary magnets 2. Therefore, it is possible to obtain the objective lens driving device that can prevent occurrence of the undesired resonance and achieve the speed-up of the ultra slim drive, i.e. the super thin type optical disk drive.

While this invention has thus far been described in connection with the preferred embodiments thereof, it will be readily possible for those skilled in the art to put this invention into practice in various other manners without departing from the scope of this invention.

## Claims

1. An objective lens driving device comprising:
a lens holder being movable and holding an objective lens;
coil devices disposed around said objective lens and held by said lens holder;
main magnets disposed around said objective lens and applying driving forces to said coil devices according to energization to said coil devices; and
auxiliary magnets each disposed each between adjacent ones of said coil devices and applying forces to said coil devices according to the energization to said coil devices for supplementing said driving forces.

2. The objective lens driving device according to claim 1, wherein said main magnets and said auxiliary magnets are substantially separated, in terms of vibration, from said lens holder.

3. The objective lens driving device according to claim 1, wherein said objective lens has an optical axis extending in a first direction, said coil devices being disposed symmetrically at both sides of a plane which includes said optical axis and extends in a second direction perpendicular to said first direction.

4. The objective lens driving device according to claim 3, wherein said adjacent ones of said coil devices are arranged in said second direction.

5. An objective lens driving device according to claim 4, wherein said main magnets are respectively disposed on both outer sides, in said second direction, of said adjacent ones of said coil devices.

6. The objective lens driving device according to claim 5, wherein said main magnets are disposed symmetrically at the both sides of said plane, each main magnet at one of said both sides having a first polarity in said second direction, each main magnet at another of said both sides having a second polarity opposite to said first polarity.

7. The objective lens driving device according to claim 6, wherein said auxiliary magnets are disposed symmetrically at the both sides of said plane, an auxiliary magnet at the one of said both sides having said second polarity, an auxiliary magnet at the other of said both sides having said first polarity.

8. The objective lens driving device according to claim 3, wherein said main magnets and said auxiliary magnets are arranged so as to generate magnetic fields in directions that cancel each other and wherein those of said main magnets confronting each other in said second direction are arranged so as to have mutually opposite polarities and those of said auxiliary magnets confronting each other in said second direction are arranged so as to have mutually opposite polarities.

9. The objective lens driving device according to claim 1, further comprising:
a damper base;
a suspension member elastically supporting said lens holder with respect to said damper base; and
a damper member interposed between said damper base and said lens holder for separating, in terms of vibration, said lens holder from said damper base.

10. The objective lens driving device according to claim 9, further comprising a yoke base fixed to said damper base for magnetically coupling said main magnets and said auxiliary magnets to said coil devices.

11. The objective lens driving device according to claim 10, wherein said main magnets and said auxiliary magnets are fixed to said yoke base.

12. The objective lens driving device according to claim 10, wherein said yoke base comprises a plurality of yokes, each of said coil devices comprising a coil member receiving a corresponding one of said yokes fitted therein.

13. The objective lens driving device according to claim 12, wherein said coil member comprises a tilting coil and a focusing coil, and said coil device further comprises a tracking coil.

14. The objective lens driving device according to claim 9, wherein said suspension member comprises:
first elastic suspension wires disposed on both sides of said damper base and said lens holder; and
second elastic suspension wires disposed between said both sides of said damper base and said lens holder.

15. An optical pickup for irradiating a beam onto an optical medium and detecting a reflected beam reflected from said optical medium, said optical pickup including an objective lens driving device which comprises:
a damper base;
a suspension member elastically supporting said lens holder with respect to said damper base; and
a damper member interposed between said damper base and said lens holder for separating, in terms of vibration, said lens holder from said damper base, said damper base being movably supported.
